# FASCICULE DE BREVET EUROPEEN

(11) **EP 1 046 535 B1**
(45) Date de publication et mention de la délivrance du brevet: **02.03.2005**
(21) Numéro de dépôt: 00401108.6
(22) Date de dépôt: 20.04.2000
(51) Int. Cl.: B60K 1/04, H01M 8/04

(54) **Dispositif de régulation thermique pour chaîne de traction d'un véhicule automobile**
Vorrichtung zur thermischen Regelung einer Antriebskette eines Kraftfahrzeuges
Device for the thermal control of a drive chain in a motor vehicle

(30) Priorité: 22.04.1999 FR 9905105
(43) Date de publication de la demande: 25.10.2000
(73) Titulaire: Renault s.a.s., 92100 Boulogne Billancourt (FR)
(72) Inventeur: Cochennec, Daniel, 92320 Chatillon (FR); Miscevic, Marc, 73220 Argentine (FR)

(56) Documents cités:
- DE-A- 4 040 350

## Description

La présente invention a pour objet un dispositif de régulation thermique pour une batterie de véhicule automobile. Ce dispositif peut être tout particulièrement mis en oeuvre dans un véhicule électrique ou hybride comportant une pile à combustible.

La réaction électrochimique qui se produit dans une pile à combustible entre l'oxygène de l'air et de l'hydrogène génère du courant électrique et de l'eau. L'électricité est stockée en partie dans une batterie tampon.

Toutefois, l'hydrogène est souvent stocké dans un réservoir sous forme liquide à une température d'environ -250°C; or, il est nécessaire que le flux d'hydrogène entrant dans la pile soit à une température supérieure à O°C afin d'éviter tout problème dégivrage dans la pile à combustible.

Le document DE 4 040 350 montre un dispositif selon le préambule de la revendication 1.

La publication US-5.577.747 expose un système dans lequel le réchauffement de l'hydrogène est assuré via un échangeur par un fluide caloporteur de refroidissement de composants auxiliaires (huile, onduleur).

La batterie du véhicule reste cependant refroidie par air, technique qui ne s'avère efficace que si la température extérieure reste inférieure à la température optimale de fonctionnement de la batterie. En effet, une température de fonctionnement trop élevée de la batterie se traduit par une perte de rendement lors de la charge voire une impossibilité de charger la batterie si la température extérieure est trop élevée et/ ou une dégradation de sa durée de vie et de son autonomie. En outre, le refroidissement par air met principalement en oeuvre un mécanisme de transfert de chaleur par convection, lequel implique un important gradient de température à proximité des parois et une augmentation du temps caractéristique du transfert de chaleur ce qui se traduit par le stockage de la chaleur produite dans la capacité thermique de la batterie.

En outre, la puissance thermique moyenne générée dans une batterie de traction d'un véhicule électrique lors d'un parcours type correspond sensiblement à la puissance nécessaire pour porter de -250° C à +10°C la température du flux d'hydrogène alimentant une pile à combustible classique (débit moyen typique de l'ordre de 0,2 g/s).

Il est donc intéressant de pouvoir utiliser la puissance thermique produite par la batterie pour réchauffer le flux d'hydrogène alimentant la pile à combustible, l'ordre de grandeur des puissances mises en jeu étant similaire.

A cet effet, l'invention a pour objet un dispositif de régulation thermique d'une chaîne de traction d'un véhicule selon les caractéristiques de la revendication 1 équipé d'un générateur de puissance, d'une batterie et d'un réservoir de fluide d'alimentation du générateur, ledit réservoir et générateur étant reliés hydrauliquement par un circuit d'alimentation, caractérisé en ce que le circuit d'alimentation du générateur coopère thermiquement avec un circuit de refroidissement de la batterie. Le circuit de refroidissement de la batterie et le circuit d'alimentation coopèrent thermiquement via un échangeur.

Selon une autre caractéristique de la présente invention, le circuit de refroidissement de la batterie peut être relié hydrauliquement via un circuit de dérivation à un circuit de refroidissement d'accessoires de la chaîne de traction.

Selon une autre caractéristique de la présente invention, l'activation du circuit de dérivation résulte du dépassement d'un seuil de la température de la batterie.

Selon une autre caractéristique de la présente invention, le circuit de refroidissement de la batterie et le circuit de refroidissement des accessoires sont interconnectés via une vanne trois voies commandée par un signal représentatif de la température de la batterie.

Selon une autre caractéristique de la présente invention, une résistance de chauffage est incorporée dans le circuit de refroidissement de la batterie.

Selon une autre caractéristique de la présente invention, un clapet anti-retour est incorporé dans le circuit de dérivation.

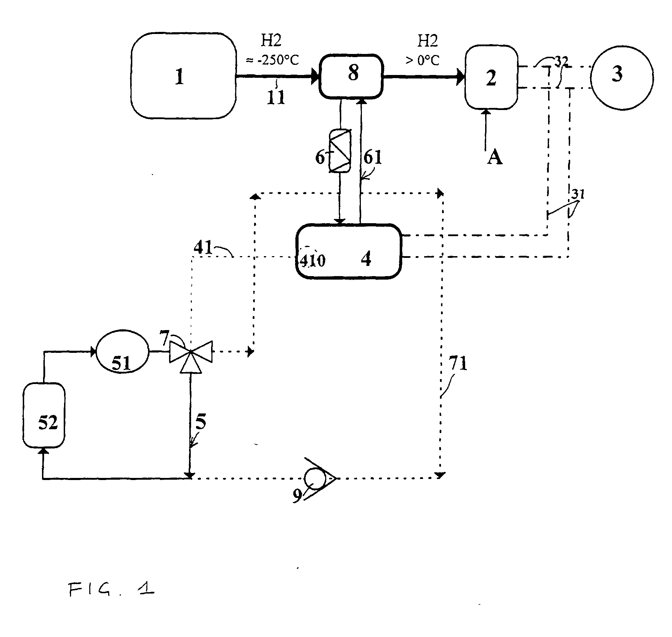

D'autres caractéristiques et avantages de l'invention apparaîtront mieux à la lecture de la description qui va suivre et en se référant à l'unique figure annexée qui représente schématiquement un dispositif de régulation thermique d'une chaîne de traction d'un véhicule automobile selon la présente invention.

En se reportant à la figure unique, on a représenté une partie d'une chaîne de traction d'un véhicule automobile comprenant un réservoir 1 de fluide d'alimentation d'un générateur de puissance 2 pour un groupe motopropulseur 3. Selon l'invention, le générateur de puissance est constitué par une pile à combustible alimentée en air A et en hydrogène H2, via un circuit d'alimentation 11, à une température supérieure à 0° C pour éviter le givrage de la pile à combustible.

L'hydrogène est stocké sous forme liquide à une température d'environ -250 °C dans le réservoir 1. Avant d'être injecté dans la pile à combustible, l'hydrogène liquide est réchauffé par un fluide caloporteur de refroidissement d'une batterie 4 au niveau d'un échangeur 8. Le fluide caloporteur de refroidissement de la batterie circule dans un circuit 61. Une résistance chauffante 6 intégrée dans le circuit 61 permet de réchauffer le fluide caloporteur lorsque la température de la batterie est insuffisante, notamment au démarrage. Le groupe motopropulseur 3 est relié à la pile à combustible 2 et à la batterie 4 respectivement par des liaisons électriques 31 et 32.

On a représenté un circuit 5 de refroidissement d'éléments auxiliaires 52 du véhicule tels que par exemple un onduleur, un compresseur et un radiateur 51. Un fluide caloporteur circule dans le circuit 5, ce dernier pouvant être connecté via une vanne trois voies 7. Cette vanne 7 est commandée par un capteur 410 de température de la batterie 4 via une liaison 41. La vanne 7 et un clapet anti-retour 9 assurent une étanchéité totale entre les circuits 5 et 71 lorsque les deux circuits doivent fonctionner indépendamment l'un de l'autre.

Le fonctionnement du dispositif va maintenant être exposé.

Les sollicitations auxquelles est soumise la batterie provoquent son échauffement interne qui nécessite son refroidissement pour que la batterie fonctionne dans des conditions optimales d'utilisation.

Lorsque l'échauffement de la batterie est suffisant, les deux circuits 5 et 61 sont isolés par la vanne 7 et le clapet 9. La chaleur prélevée à la batterie par le fluide caloporteur circulant dans le circuit 61 est alors suffisante pour assurer seule, au niveau de l'échangeur 8, le passage de l'hydrogène à un niveau enthalpique suffisant pour être utilisable par la pile 2. Le refroidissement des auxiliaires 52 est alors assuré uniquement par le radiateur 51.

Lorsque la batterie est peu sollicitée, elle produit trop peu de chaleur pour assurer l'échauffement correct de l'hydrogène. Une partie du fluide caloporteur du circuit 5 des auxiliaires 52 est alors dérivée vers le circuit 61 via la vanne 7 commandée par le capteur 410 de telle sorte que la température du mélange des deux flux à l'entrée de l'échangeur 8 soit suffisante pour réchauffer l'hydrogène.

La combinaison des deux circuits 5 et 61 permet un transfert de chaleur des auxiliaires vers l'hydrogène, ce qui permet de répondre aux contraintes d'utilisation en température de la batterie et de réchauffer suffisamment l'hydrogène avant son entrée dans la pile à combustible.

Lorsque le véhicule est démarré, la chaleur dissipée par les auxiliaires et la batterie peut être temporairement insuffisante pour réchauffer suffisamment l'hydrogène. Pour résoudre ce problème, les deux circuits 5 et 61 sont isolés par la vanne 7 et le clapet 9 et le fluide caloporteur du circuit 61 est porté à une température suffisante pour réchauffer l'hydrogène par la résistance 6 alimentée par la batterie 4. Dès que la température du fluide caloporteur à l'entrée de l'échangeur 8 sera suffisante, la résistance 6 ne sera plus alimentée par la batterie 4.

Le dispositif selon l'invention permet non seulement de refroidir efficacement la batterie en s'affranchissant de la contrainte de la température de l'air extérieur qui est très pénalisant pour les systèmes de refroidissement à air, mais encore de réchauffer l'hydrogène quel que soit la sollicitation de la batterie.

En outre, le dispositif selon l'invention peut s'appliquer à tout véhicule possédant une source froide à basse température.

## Revendications

1. Dispositif de régulation thermique d'une chaîne de traction d'un véhicule équipé d'un générateur d'énergie électrique (2), d'une batterie (4) et d'un réservoir (1) de fluide d'alimentation du générateur, ledit réservoir (1) et générateur étant reliés hydrauliquement par un circuit d'alimentation (11), **caractérisé en ce que** le circuit d'alimentation du générateur coopère thermiquement avec un circuit de refroidissement (61) de la batterie via un échangeur (8) et le générateur (2) d'énergie électrique est une pile à combustible.

2. Dispositif de régulation selon la revendication précédente, **caractérisé en ce que** le circuit de refroidissement (61) de la batterie (4) peut être relié hydrauliquement via un circuit de dérivation (71) à un circuit de refroidissement (5) d'accessoires de la chaîne de traction.

3. Dispositif de régulation selon l'une quelconque des revendications précédentes, **caractérisé en ce que** l'activation du circuit de dérivation (71) résulte du dépassement d'un seuil de la température de la batterie (4).

4. Dispositif de régulation selon la revendication précédente, **caractérisé en ce que** le circuit de refroidissement de la batterie et le circuit de refroidissement des accessoires sont interconnectés via une vanne trois voies (7) commandée par un signal représentatif de la température de la batterie.

5. Dispositif de régulation selon l'une quelconque des revendications précédentes, **caractérisé en ce qu'**une résistance de chauffage (6) est incorporée dans le circuit de refroidissement de la batterie.

6. Dispositif de régulation selon l'une quelconque des revendications précédentes, **caractérisé en ce qu'**un clapet anti-retour (9) est incorporé dans le circuit de dérivation (71).

## Claims

1. Thermal control device for a drive train of a vehicle equipped with a power generator, a battery and a generator supply fluid reservoir, said reservoir (1) and generator being hydraulically connected by a supply circuit (11), **characterized in that** the supply circuit of the generator cooperates thermally with a cooling circuit (61) of the battery via an exchanger (8).

2. Control device according to the previous claim, **characterized in that** the cooling circuit (61) of the battery (4) can be hydraulically connected via a branch circuit (71) to a cooling circuit (5) for accessories of the drive train.

3. Control device according to any one of the previous claims, **characterized in that** the activation of the branch circuit (71) results from the crossing of a battery temperature (4) threshold.

4. Control device according to the previous claim, **characterized in that** the cooling circuit of the battery and the cooling circuit for the accessories are interconnected via a three-way valve (7) controlled by a signal representing the battery temperature.

5. Control device according to any one of the previous claims, **characterized in that** a heating resistor (6) is incorporated into the cooling circuit of the battery.

6. Control device according to any one of the previous claims, **characterized in that** a non-return valve (9) is incorporated into the branch circuit (71).

## Patentansprüche

1. Vorrichtung zur thermischen Regelung einer Antriebskette bzw. eines Antriebsstrangs eines Fahrzeugs, das mit einem Generator für elektrische Energie ausgestattet ist, einer Batterie und einem Flüssigkeitstank zur Versorgung des Generators, wobei der Tank (1) und der Generator hydraulisch über eine Versorgungsleitung (11) verbunden sind, **dadurch gekennzeichnet, dass** die Versorgungsleitung des Generators thermisch mit einer Kühlleitung (61) der Batterie über einen Wärmetauscher (8) zusammenwirkt.

2. Regelungsvozzichtnng nach dem vorhergehenden Anspruch, **dadurch gekennzeichnet, dass** die Kühlleitung (61) der Batterie (4) hydraulisch über eine Abzweigungsleitung (71) mit einer Nebenkühlleitung (8) der Antriebskette verbunden werden kann.

3. Regelungsvorrichtung nach irgendeinem der vorhergehenden Ansprüche, **dadurch gekennzeichnet, dass** die Aktivierung der Abzweigungsleitung (71) aus dem Überschreiten einer Grenze bzw. eines Schwellenwerts der Temperatur der Batterie (4) resultiert.

4. Regelungsvorrichtung nach dem vorhergehenden Anspruch, **dadurch gekennzeichnet, dass** die Kühlleitung der Batterie und die Kühlleitung von Zubehörteilen über ein Drei-Wege-Ventil (7) untereinander verbunden sind, welches durch ein Signal gesteuert wird, das stellvertretend für die Temperatur der Batterie ist.

5. Regelungsvorrichtung nach irgendeinem der vorhergehenden Ansprüche, **dadurch gekennzeichnet, dass** ein Heizwiderstand (6) in der Kühlleitung der Batterie eingebaut ist.

6. Regelungsvorrichtung nach irgendeinem der vorhergehenden Ansprüche, **dadurch gekennzeichnet, dass** ein Rückschlag-Ventil (9) in der Abzweigungsleitung (71) eingebaut ist.
